Europäisches Patentamt

European Patent Office

Office européen des brevets

(11) Numéro de publication : **0 355 077 B1**

# (12) FASCICULE DE BREVET EUROPEEN

(45) Date de publication du fascicule du brevet :
04.11.92 Bulletin 92/45

(21) Numéro de dépôt : **89460024.6**

(22) Date de dépôt : **10.08.89**

(51) Int. Cl.⁵ : $A01K\ 39/02$, $A01K\ 7/06$

(54) **Distributeur d'eau pour volailles.**

(30) Priorité : **17.08.88 FR 8811076**

(43) Date de publication de la demande :
**21.02.90 Bulletin 90/08**

(45) Mention de la délivrance du brevet :
**04.11.92 Bulletin 92/45**

(84) Etats contractants désignés :
**AT BE CH DE ES FR GB GR IT LI LU NL SE**

(56) Documents cités :
**DE-C- 62 642**
**US-A- 2 510 252**

(73) Titulaire : **Le Roy, Ernest**
**48, rue Monsieur-Vincent BP 56132**
**F-35056 Rennes Cédex (FR)**

(72) Inventeur : **Le Roy, Ernest**
**48, rue Monsieur-Vincent BP 56132**
**F-35056 Rennes Cédex (FR)**

(74) Mandataire : **Le Guen, Louis François**
**CABINET Louis LE GUEN 38, rue Levavasseur**
**B.P. 91**
**F-35802 Dinard Cédex (FR)**

## Description

La présente invention concerne un distributeur d'eau, particulièrement pour volailles, comprenant une vanne dont le corps de vanne est une canalisation et dont le clapet est suspendu à un ressort de rappel, lui-même suspendu au fond de la canalisation, le clapet obstruant la canalisation tant que les animaux ne le font pas osciller.

En pratique, ce type de distributeur d'eau, utilisable par des volailles, des lapins, etc., est destiné à assurer un écoulement d'eau correspondant exactement aux capacités d'absorption directes de l'animal.

On connaît déjà des distributeurs d'eau dont l'écoulement est provoqué par soulèvement d'un clapet. De tels distributeurs d'eau ont pour inconvénient majeur qu'ils ne sont pas étanche quand les clapets sont montés sur une canalisation unique, ce qui est généralement le cas, et que la canalisation est soumise à des vibrations, particulièrement quand les distributeurs sont accrochés à l'installation de distribution d'aliment. Or, la fixation des distributeurs sur l'installation de distribution d'aliment est, en pratique, très efficace.

Dans le document US-A-2 510 252, il est décrit une vanne de distribution goutte à goutte pour volailles qui comprend une source d'alimentation en eau présentant une sortie ouverte vers le bas et pourvue d'un siège, d'un clapet fermant la sortie en montant près dudit siège, un ressort rappelant le clapet contre le siège, des moyens pour empêcher la fermeture du clapet au-delà d'une position permettant la création d'un film, et une tige pendante qui est exposée aux coups de bec des oiseaux de façon à vibrer latéralement, de manière à ce que le clapet laisse passer au moins une goutte d'eau qui est rassemblée en bas de la tige où la goutte peut être bue.

L'objet de la vanne décrite dans le document US-A-2 510 252 est d'empêcher l'écoulement d'une trop grande quantité d'eau quand la tige est agitée par un oiseau, ce qui entraîne une perte d'eau inutile et le mouillage de la zone environnante ce qui peut être préjudiciable à l'élevage de la volaille.

Un inconvénient de la vanne décrite dans le document US-A-2 510 252 tient à la forme de la partie inférieure du clapet et aux dispositions des butées limitant l'angle d'inclinaison du clapet. Le ressort de rappel est accroché dans une gorge de la partie inférieure du clapet. En pratique, cette gorge est aussi destinée à piéger l'eau qui descend et à servir de réservoir tampon. Par ailleurs, les spires du ressort le long du clapet ralentissent la descente de l'eau. Les butées qui, en cas de forte inclinaison du clapet, viennent en contact avec la partie cylindrique de celui-ci ou à sa proximité, piègent également l'eau par effet de capillarité. Il en résulte de tous ces effets qu'il y a un délai sensible entre le moment où l'oiseau agite le clapet et celui où l'eau est présentée à l'oiseau en bas du clapet. L'oiseau peut n'avoir pas attendu si bien que l'eau tombe avant d'être consommée car il n'y a pas de relation directe entre les appels d'eau et la présentation de l'eau ce qui risque de provoquer des débordements de la gorge.

Un objet de la présente invention consiste à prévoir un distributeur d'eau, tel que mentionné dans l'introduction mentionnée ci-dessus, qui ne présente pas les inconvénients déjà mentionnés, mais tous les avantages concernant notamment la relation directe entre les appels d'eau des oiseaux et la mise à disposition de l'eau appelée et, par conséquent, la suppression de la perte d'eau par excès d'écoulement lors d'une agitation normale du clapet.

Suivant l'invention, le clapet est une tétine sensiblement en forme d'oeuf dont la pointe est dirigée vers le bas et la calotte sphérique supérieure est appliquée contre le siège de la vanne, le centre de ladite calotte étant accrochée audit ressort de rappel, des moyens étant prévus pour limiter l'inclinaison du clapet d'une manière omnidirectionnelle.

Suivant une caractéristique préfèrée, la partie intermédiaire du corps du clapet est tronconique se raccordant à la calotte sphérique et s'amincissant vers la pointe.

Suivant une autre caractéristique préférée, la pointe inférieure du clapet est constituée par la paroi latérale d'un tronc de cône contenant une bille métallique.

Suivant une autre caractéristique préférée, les moyens de limitation de l'inclinaison du clapet sont constitués par une couronne sous laquelle pendent des bras dont les extrémités se raccordent, pratiquement sans solution de continuité, à la partie intermédiaire tronconique du clapet, des moyens solidaires du siège de la vanne limitant le mouvement vertical des bras vers le bas.

Suivant une autre caractéristique préférée, lesdits moyens solidaires du siège limitent directement les mouvement verticaux de la couronne.

Suivant une autre caractéristique préférée, chaque bras a une forme coudée avec une partie verticale pendant directement sous la couronne et une partie oblique se raccordant au clapet, la base de la partie verticale étant plus large vers l'extérieur que la partie oblique et servant de butée et les moyens de limitation de mouvement vertical sont constitués par une seconde couronne disposée sous lesdites butées et solidaire du siège de la vanne.

Suivant une autre caractéristique préférée, le siège est équipé d'un joint d'étanchéité.

Les caractéristiques de l'invention mentionnées ci-dessus, ainsi que d'autres, apparaîtront plus clairement à la lecture de la descriptions d'exemples de réalisation, ladite description étant faite en relation avec les dessins joints, parmi lesquels:

la Fig. 1 est une vue en coupe verticale d'un distributeur d'eau suivant l'invention,

la Fig. 2 est une vue en coupe d'une variante préférée du distributeur d'eau de la Fig. 1, et

la Fig. 3 est une vue schématique en perspective des moyens de limitation d'inclinaison du clapet du distributeur d'eau de la Fig. 3.

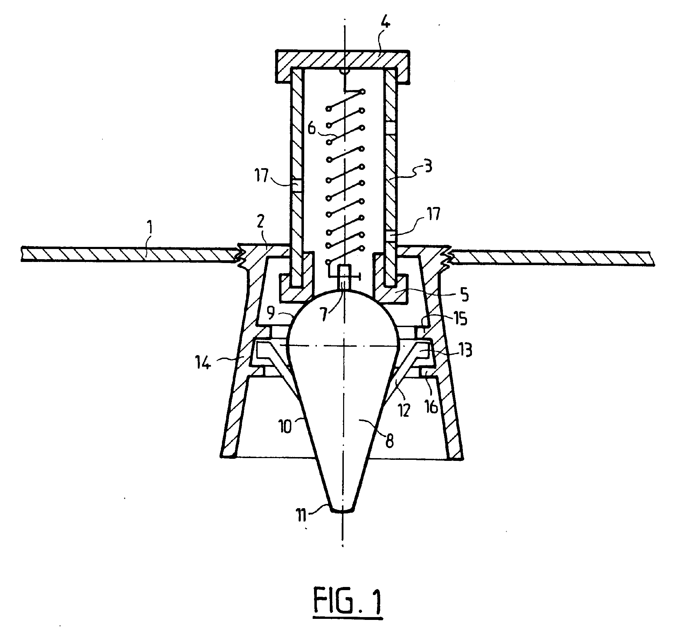

Le distributeur d'eau de la Fig. 1 est destiné à être monté dans le fond de la gouttière 1 d'un abreuvoir. Il comprend une bague de fixation 2 vissée dans le fond 1 et dans laquelle est fixée verticalement une canalisation tubulaire 3 surmontée d'un chapeau 4 et munie, à sa partie inférieure, d'un siège 5. Au centre du chapeau 4 est fixée l'extrémité supérieure d'un ressort de traction 6 dont l'extrémité inférieure supporte, par l'intermédiaire d'un téton 7, un clapet 8. Le ressort 6 sert de ressort de rappel pour maintenir la surface supérieure du clapet 8 contre le siège 5.

Le clapet 8 a la forme générale d'un oeuf dont la pointe est tournée vers le bas, avec une partie supérieure 9 en forme de portion de sphère, une partie intermédiaire 10 en forme de tronc de cône se raccordant sans solution de continuité à la partie sphérique 9, et une pointe arrondie 11. Le téton 7 est solidaire du clapet 8 et se dresse verticalement sur le sommet de la partie sphérique 9.

De la partie tronconique 10 du clapet 8 partent obliquement vers le haut des bras 12 dont les extrémités libres 13 sont, sur une courte distance, coudées horizontalement. Par ailleurs, sous la bague 2 est prévu un tronc de cône 14 s'évasant vers le bas et, à l'intérieur duquel sont prévues deux arêtes circulaires 15 et 16 qui définissent entre elles un intervalle annulaire dans lequel les extrémités 13 des bras 12 sont prisonnières, avec un certain jeu. L'ensemble des bras avec leurs extrémités 13, et les arêtes 15 et 16 forment des moyens de limitation de l'inclinaison du clapet 8, les arêtes 15 et 16 servant de butées pour les extrémités 13.

Enfin, des trous 17 dans la canalisation 3 permettent à l'eau de la gouttière 1 de pénétrer au-dessus de la partie sphérique 9 du clapet 8.

On va maintenant décrire le fonctionnement du distributeur de la Fig. 1. A l'état de repos, le clapet 8 est vertical, avec sa partie sphérique 9 appliquée par le ressort de rappel 6 contre le siège 5, si bien que la vanne est fermée d'une manière étanche. L'eau ne s'écoule pas. Quand un oiseau picore le bout 11, le clapet 8 s'incline avec une extrémité 13 du bras 12 opposé au bec de l'oiseau venant en contact avec l'arête supérieure 15 et l'extrémité 13 du bras 12 proche du bec venant en contact avec l'arête inférieure 16. Il en résulte un basculement du clapet et un léger décollement de la partie sphérique 9 du siège 5. Une quantité d'eau du volume d'une goutte s'écoule le long du clapet et vient former une goutte en bas du bout 11. L'oiseau peut alors boire cette goutte.

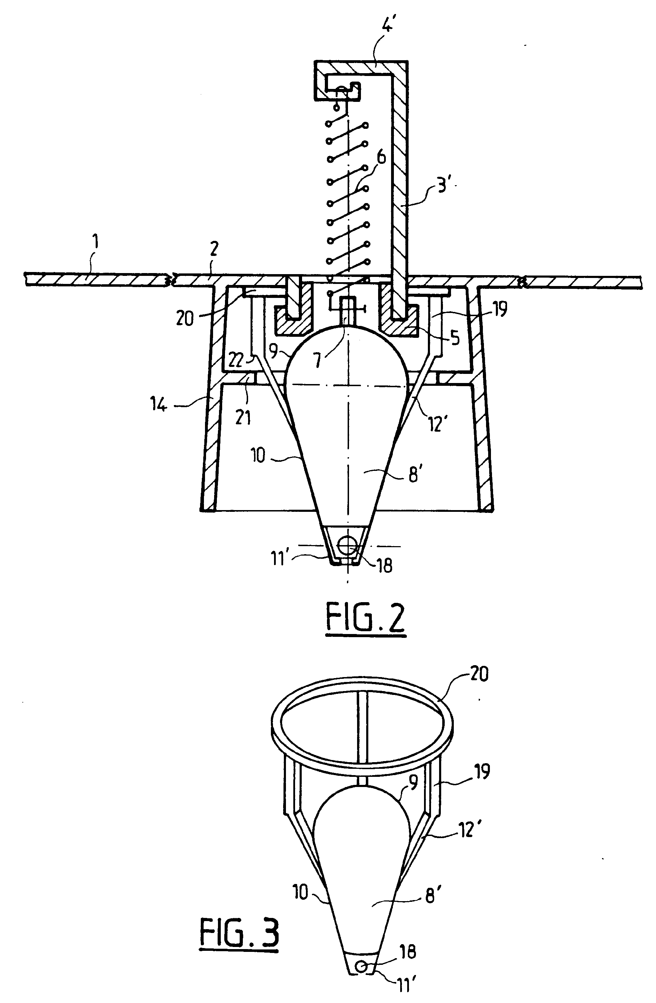

La variante de distributeur d'eau montré à la Fig. 2 constitue, en fait, un exemple de réalisation préféré suivant l'invention. A la Fig. 2, on a conservé les mêmes références numériques quand elles désignent des pièces déjà mentionnées en relation avec la Fig. 1. Ce distributeur est également destiné à être monté dans le fond de la gouttière 1 d'un abreuvoir. Une bague de fixation 2 est vissée dans le fond 1 et porte une portion de canalisation tubulaire 3′ munie, à sa base, d'un siège de vanne 5. A son extrémité supérieure 4′, en forme de crochet, est accroché l'extrémité supérieure d'un ressort de traction 6 dont l'extrémité inférieure supporte, par l'intermédiaire d'un téton 7, un clapet 8′. Le ressort 6 sert de ressort de rappel pour maintenir la surface supérieure du clapet 8′ contre le siège 5.

Le clapet 8′ a sensiblement la même forme que le clapet 8, avec une partie sphérique 9, une partie tronconique 10, mais avec une pointe 11′ comportant un volume sensiblement tronconique à paroi métallique dans lequel est emprisonnée une petite bille métallique 18, dont on décrira le rôle dans la suite.

De la partie tronconique 10 du clapet 8′ partent obliquement vers le haut des bras 12′ dont les extrémités libres 19 sont coudées verticalement vers le haut et raccordées à un anneau 20.

En pratique, comme le montre la vue en perspective de la Fig. 3, le corps de clapet 8′, les bras 12′, leurs prolongement verticaux 19 et l'anneau 20 ne forment qu'une seule pièce. A la Fig. 3, on montré un clapet 8′ comportant trois bras 12′, orientés a 0°, 120° et 240°, mais il doit être bien entendu que le nombre de bras peut être différent. Un seul ou deux bras peuvent être utilisés car on doit limiter le plus possible les endroits où l'eau peut être retenue par capillarité.

Sous la bague 2 est également prévu un tronc de cône 14 s'évasant vers le bas et à l'intérieur duquel est prévue une arête circulaire 21 disposée légèrement sous les bases 22 des parties 19 des bras 12′. Comme le montre la Fig. 2, les parties 19 ont une section plus grande que les parties obliques des bras 12′, si bien que les bases 22 peuvent servir de butées contre l'arête 21.

En position de repos, Fig. 2, l'anneau 20 est appliqué sous la bague 2 et entoure la canalisation 3′ et son siège 5. Quand un oiseau picore le clapet 8′, celui-ci s'incline autour du point de l'anneau 20 le plus éloigné du bec de l'oiseau et la base 22 la plus proche de ce bec vient en butée sur l'arête 21. Une goutte se forme dans les mêmes conditions qu'avec le distributeur d'eau de la Fig. 1.

La virole 11′ et la bille 18 engendrent un bruit métallique à chaque coup porté par un oiseau, ce qui tend à les attirer et notamment à les aider à trouver le distributeur notamment quand ils sont jeunes.

Le clapet suivant l'invention peut être en matière plastique ou en métal, selon la force des volailles à nourrir.

## Revendications

1) Distributeur d'eau, particulièrement pour volailles, comprenant une vanne dont le corps de vanne est une canalisation (3) et dont le clapet (8) est suspendu à un ressort de rappel (6), lui-même suspendu au fond de la canalisation, le clapet (8) obstruant la canalisation (3) tant que les animaux ne le font pas osciller, des moyens (13, 15, 16) étant prévus pour limiter l'inclinaison du clapet d'une manière omnidirectionnelle caractérisé en ce que le clapet (8) est une tétine sensiblement en forme d'oeuf dont la pointe (11) est dirigée vers le bas et la calotte sphérique supérieure (9) est appliquée contre le siège (5) de la vanne, le centre de ladite calotte (9) étant accrochée audit ressort de rappel (6).

2) Distributeur suivant la revendication 1, caractérisé en ce que la partie intermédiaire (10) du corps du clapet (8) est tronconique se raccordant à la calotte sphérique (9) et s'amincissant vers la pointe (11).

3) Distributeur suivant la revendication 1 ou 2, caractérisé en ce que la pointe inférieure (11') du clapet (8) est constituée par la paroi latérale d'un tronc de cône contenant une bille métallique (18).

4) Distributeur suivant l'une des revendications 1 à 3, caractérisé en ce que les moyens de limitation de l'inclinaison du clapet (8) sont constitués par une couronne (20) sous laquelle pendent des bras (12') dont les extrémités se raccordent, pratiquement sans solution de continuité, à la partie intermédiaire tronconique (10) du clapet (8), des moyens (21, 22) solidaires du siège de la vanne limitant le mouvement vertical des bras vers le bas.

5) Distributeur suivant la revendication 4, caractérisé en ce que lesdits moyens solidaires du siège limitent directement les mouvements verticaux de la couronne (20).

6) Distributeur suivant la revendication 4, caractérisé en ce que chaque bras (12') a une forme coudée avec une partie verticale (19) pendant directement sous la couronne (20) et une partie oblique se raccordant au clapet (8), la base de la partie verticale (19) étant plus large vers l'extérieur que la partie oblique et servant de butée et les moyens de limitation de mouvement vertical sont constitués par une seconde couronne (21) disposée sous lesdites butées et solidaire du siège de la vanne.

7) Distributeur suivant l'une des revendications 1 à 6, caractérisé en ce que le siège (5) est équipé d'un joint d'étanchéité.

## Patentansprüche

1. Tränke, insbesondere für Vögel, mit einem Ventil, dessen Körper die Form einer Röhre (3) hat und dessen Mechanismus (8) an einer Rückholfeder (6) aufgehängt ist, die ihrerseits am Boden der Röhre aufgehängt ist, wobei der Ventilmechanismus (8) die Röhre (3) schließt, solange ihn Tiere nicht betätigen, wobei Mittel (13, 15, 16) vorgesehen sind, um eine Neigung des Ventilmechanismus in alle Richtungen zu begrenzen, dadurch gekennzeichnet, daß der Ventilmechanismus (8) im wesentlichen eiförmig ist, wobei die Spitze (11) nach unten gerichtet ist und die obere kugelförmige Kuppe (9) am Sitz (5) des Ventils anliegt, und wobei die Mitte der Kuppe an der Rückholfeder (6) angebracht ist.

2. Tränke nach Anspruch 1, dadurch gekennzeichnet, daß der mittlere Teil (10) des Ventilmechanismus (8) kegelstumpfförmig ausgebildet ist und sich von der kugelförmigen Kuppe (9) zur Spitze (11) verjüngt.

3. Tränke nach Anspruch 1 oder 2, dadurch gekennzeichnet, daß die untere Spitze (11') des Ventilmechanismus (8) als Seitenwand eines Kegelstumpfes ausgebildet ist und eine Metallkugel (18) enthält.

4. Tränke nach einem der Ansprüche 1 bis 3, dadurch gekennzeichnet, daß die Mittel zur Begrenzung einer Neigung des Ventilmechanismus (8) aus einem Ring (20) mit nach unten weisenden Armen (12') bestehen, deren Enden praktisch ohne Zwischenraum mit dem mittleren konischen Teil (10) des Ventilmechanismus (8) verbunden sind, und daß mit dem Ventilsitz integrale Mittel (21, 22) die vertikale Abwärtsbewegung der Arme begrenzen.

5. Tränke nach Anspruch 4, dadurch gekennzeichnet, daß die mit dem Sitz integralen Mittel unmittelbar die vertikalen Bewegungen des Ringes (20) begrenzen.

6. Tränke nach Anspruch 4, dadurch gekennzeichnet, daß jeder Arm (12') eine gebogene Form mit einem vertikalen, unmittelbar von dem Ring (20) nach unten weisenden Teil (19) und einen mit dem Ventilmechanismus (8) verbundenen schrägen Teil aufweist, wobei die Basis des vertikalen Teils (19) nach außen hin größer ist als der schräge Teil und als Anschlag wirkt, und daß die Mittel zur Begrenzung der vertikalen Bewegung durch einen zweiten Ring (21) gebildet werden, der unter den Anschlägen angeordnet ist und integral mit dem Ventilsitz ist.

7. Tränke nach einem der Ansprüche 1 bis 6, dadurch gekennzeichnet, daß der Sitz (5) mit einer Dichtung ausgerüstet ist.

## Claims

1. A waterer, in particular, for birds and comprising a valve, the body of the valve being in the form of a tube (3) and the valve mechanism (8) being suspended from a return spring (6), itself suspended from the lower part of the tube, the valve mechanism (8) closing the tube (3) when this is not activated by the livestock, a means (13, 15, 16) being provided to limit the inclination of the valve mechanism in any direction, charactised in that the valve mechanism (8) is substantially egg shaped, the point (11) being directed downwards and the upper spherical dome (9) is applied against the seating (5) for the valve, the centre of the said dome (9) being attached to the said return spring (6).

2. Waterer in accordance with claim 1, characterised in that the intermediate part (10) of the body of the valve mechanism (8) is truncated, being connected to the spherical dome (9) and reducing towards the point (11).

3. Waterer in accordance with claim 1 or 2, characterised in that the lower point (11') of the valve mechanism (8) is formed by the lateral wall of a truncated cone containing a metal ball (18).

4. Waterer in accordance with one of claims 1 to 3, characterised in that the means used to limit the inclination of the valve mechanism (8) comprises a ring (20) under which are suspended arms (12'), the ends being connected, practically with no gap or break, to the truncated intermediate part (10) of the valve mechanism (8), a means (21, 22) integral with the valve seating limiting the vertical downwards movement of the arms.

5. Waterer in accordance with claim 4, characterised in that the said means integral with the seating directly limits the vertical movements of the ring (20).

6. Waterer in accordance with claim 4, characterised in that each arm (12') is formed or bent, with a vertical part (19) suspended directly under the ring (20) and an oblique part connected to the valve mechanism (8), the base of the vertical part (19) being greater towards the exterior than the oblique part and acting as a stop, and the means of limiting the vertical movement comprises a second ring (21) positioned under the said stops and integral with the seating for the valve.

7. Waterer in accordance with one of claims 1 to 6, characterised in that the seating (5) is equipped with a seal.

FIG. 1

FIG.2

FIG.3